# FASCICULE DE BREVET EUROPEEN

(11) **EP 0 558 383 B1**
(45) Date de publication et mention de la délivrance du brevet: **24.04.1996**
(21) Numéro de dépôt: 93400419.3
(22) Date de dépôt: 18.02.1993
(51) Int. Cl.: A01F 29/00

(54) **Engin de distribution à distributeur centrifuge, notamment pour de la nourriture pour animaux**
Zentrifugalstreuer, insbesondere für Futtermaterial
Centrifugal distributer, notably for animal feed

(30) Priorité: 25.02.1992 FR 9202163
(43) Date de publication de la demande: 01.09.1993
(73) Titulaire: AUDUREAU, F-85260 L'HERBERGEMENT (FR)
(72) Inventeur: Bonnaudet, Jean-Claude, F-85260 l'Herbergement (FR)
(74) Mandataire: Jaunez, Xavier

(56) Documents cités:
- FR-A- 2 585 535
- FR-A- 2 636 204
- FR-A- 2 662 573
- GB-A- 2 070 401

## Description

La présente invention concerne un engin de distribution à distributeur centrifuge s'appliquant notamment, main non exclusivement, au domaine de l'agriculture.

On connaît déjà des engins de distribution à distributeur centrifuge conçus pour distribuer de la nourriture aux animaux, ces engins comportant généralement un caisson, un carter sur le côté du caisson comprenant un orifice d'entrée au niveau d'un panneau et un orifice périphérique de sortie, une turbine de distribution équipée de pales sensiblement radiales et montée tournante dans ce carter, et des moyens pour entraîner le produit contenu dans le caisson vers la turbine, conformément au préambule de la revendication 1.

Le document FR-A-2 585 535 de la demanderesse illustre un engin de distribution agencé comme indiqué ci-dessus.

Les engins de ce type peuvent être éventuellement équipés de moyens de recyclage de produit du distributeur centrifuge vers le caisson, lorsque l'on souhaite distribuer de la nourriture mélangée aux animaux, par exemple un mélange de fourrage tel que du foin ou du maïs avec des granulés (l'engin est alors dénommé distributeur-mélangeur), ou encore être équipés d'une porte arrière articulée sur un bras s'étendant au-dessus du caisson (l'engin est alors dénommé désileuse).

D'une façon générale, comme c'est le cas dans le document FR-A-2 585 535, les pales de la turbine de distribution équipant de tels engins balaient la face intérieure du panneau du carter qui présente l'orifice d'entrée, c'est-à-dire que ces pales passent au ras dudit panneau.

De ce fait, si l'on souhaite utiliser un orifice d'entrée de section importante, et en particulier de forme générale rectangulaire, pour obtenir un débit important de produit, on risque de rencontrer un bourrage, du fait du pincement du produit au niveau des bords de l'orifice d'entrée. Cela oblige alors à prévoir une puissance élevée pour la motorisation associée à l'entraînement de la turbine de distribution.

Cet inconvénient est encore plus marqué lorsque le caisson est équipé de moyens de déchiquetage adjacents au panneau présentant l'orifice d'entrée, par exemple un ou plusieurs cylindres démêleurs, pour assurer la distribution de bottes rondes ou rectangulaires disposées dans le caisson. De plus, dans ce cas, le produit peut arriver en nappe dans le carter en étant dirigé vers la zone centrale de la turbine (au voisinage de l'axe de celle-ci) dans laquelle l'action centrifuge est faible, ce qui n'est pas favorable à l'homogénéité du produit qui subit l'action des pales de la turbine.

Par ailleurs, l'état de la technique est également illustré par les documents FR-A-2 636 204 et GB-A-2 070 401, qui décrivent des engins de distribution ne comportant pas de panneau d'entrée devant la turbine. Dans ce cas, la turbine est très exposée, et le produit est dans sa totalité immédiatement soumis à l'action des pales de la turbine.

L'invention a précisément pour but de résoudre le problème précité, en proposant un engin de distribution ne présentant par les inconvénients et/ou limitations précités.

L'invention a ainsi pour objet de réaliser un engin de distribution dont la structure permet d'améliorer l'état du produit soumis à l'action de la turbine de distribution, ce qui permet d'obtenir une fonctionnement souple et sans à-coups, ainsi qu'une diminution de la puissance nécessaire pour l'entraînement de cette turbine.

Il s'agit plus particulièrement d'un engin de distribution comportant un caisson, un carter sur un côté du caisson comprenant un orifice d'entrée au niveau d'un panneau et un orifice périphérique de sortie, une turbine de distribution équipée de pales sensiblement radiales et montée tournante dans ce carter, et des moyens pour entraîner le produit contenu dans le caisson vers la turbine, caractérisé en ce que la turbine de distribution comporte un plateau tournant sur lequel sont montées les pales, avec un agencement tel que le bord frontal des pales le plus éloigné du plateau est à une distance prédéterminée D du panneau présentant l'orifice d'entrée, ladite distance prédéterminée étant au moins égale à 0,4 H où H est la hauteur axiale des pales, de façon à définir une chambre amont dans laquelle pénètre le produit avant d'être soumis à l'action desdites pales.

Une telle chambre amont permet un décompactage du produit pénétrant dans le carter de la turbine de distribution, et une meilleure diffusion de ce produit dans ledit carter.

En particulier, lorsqu'il s'agit d'un engin dont le caisson est équipé de moyens de déchiquetage adjacents au panneau présentant l'orifice d'entrée, la chambre amont procure un effet favorable au démêlage du produit. Il peut alors s'avérer avantageux que les moyens de déchiquetage comportent un cylindre démêleur dont les dents passent dans la chambre amont lors de la rotation dudit cylindre : le démêlage ainsi favorisé permet de diminuer notablement la puissance de motorisation nécessaire.

De préférence, la distance prédéterminée est voisine de O,9 H.

Avantageusement encore, l'une au moins des pales de la turbine de distribution comporte une portion de base qui est fixée au plateau en étant légèrement inclinée vers ledit plateau, pour former un angle aigu du côté correspondant au sens de rotation de ladite turbine. Ceci permet de mieux ramener le produit vers le plateau de la turbine.

Il est également intéressant que l'une au moins des pales de la turbine de distribution comporte une portion de base qui est fixée au plateau, et qui présente un rebord légèrement incliné par rapport à ladite portion de base, du côté correspondant au sens de rotation de ladite turbine. On évite ainsi un stationnement prolongé du produit dans la chambre amont.

De préférence également, l'une au moins des pales de la turbine de distribution présente une direction longitudinale qui est légèrement inclinée par rapport à la direction radiale associée, dans le sens du dégagement vers l'extérieur. On favorise ainsi le dégagement progressif du produit vers la périphérie du carter, et vers l'orifice de sortie.

Avantageusement encore, la turbine de distribution comporte au moins une pale qui est prolongée radialement vers l'intérieur, de façon à brasser la zone immédiatement adjacente à l'axe de ladite turbine. En particulier, la turbine de distribution comporte deux pales prolongées radialement vers l'intérieur, ces deux pales étant symétriques l'une de l'autre par rapport à l'axe de ladite turbine. On évite ainsi toute accumulation de produit au voisinage de l'axe de la turbine, c'est-à-dire dans une zone dans laquelle l'action centrifuge est faible.

D'autres caractéristiques et avantages de l'invention apparaîtront plus clairement à la lumière de la description qui va suivre et des dessins annexés, concernant un mode de réalisation particulier, en référence aux figures où :
- la figure 1 est une vue en perspective d'un engin de distribution à distributeur centrifuge conforme à l'invention, ici équipé de moyens de déchiquetage réalisés sous forme d'un cylindre démêleur ;
- la figure 2 est une vue en élévation, partiellement en coupe, du distributeur centrifuge de l'engin précité, montrant l'agencement particulier des pales de la turbine de distribution ;
- la figure 3 est une coupe selon III-III de la figure 2, permettant de mieux distinguer la chambre amont du carter de turbine ;
- la figure 4 est une coupe partielle selon IV-IV de la figure 2 montrant l'organisation particulière de la section transversale d'une pale de la turbine de distribution.

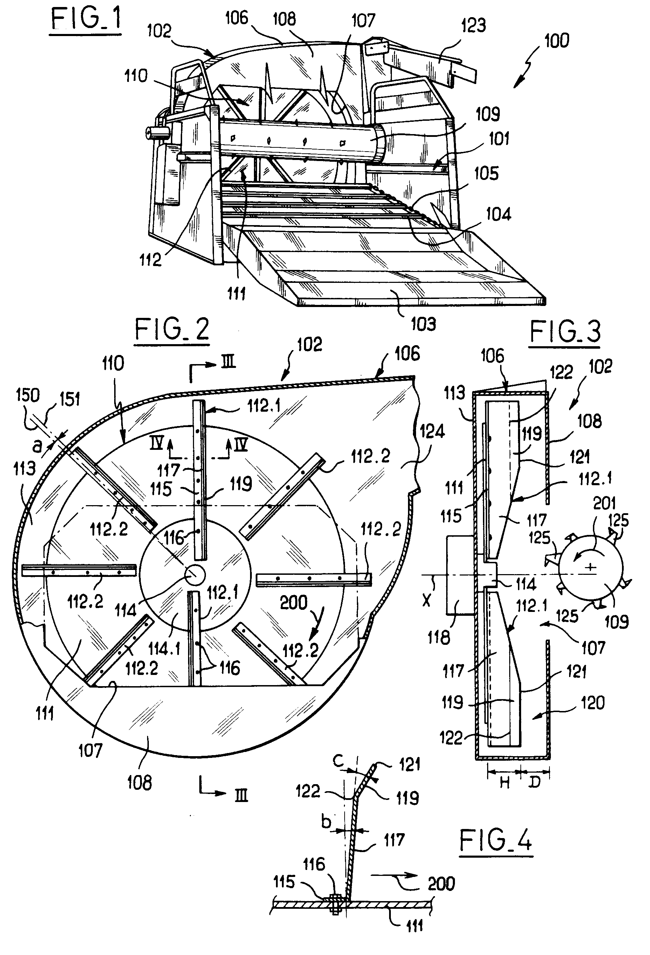

L'engin de distribution 1OO illustré en figure 1 comporte, d'une façon classique, un caisson 101, qui peut être un caisson porté, semi-porté, ou auto-porté pour être entraîné à l'arrière d'un tracteur. Sur le côté avant, le caisson 101 comporte un distributeur centrifuge 102, et à l'arrière, il comporte une porte pivotante 103 pouvant servir au chargement de produit à distribuer. Sur le fond du caisson, celui-ci comporte des moyens pour entraîner un produit contenu dans ledit caisson vers le distributeur centrifuge 102, ces moyens étant ici constitués par des barres transversales 104 entraînées par une chaîne 105. Accessoirement, le caisson 101 comporte ici des moyens de déchiquetage adjacents au distributeur centrifuge 102, réalisés sous la forme d'un cylindre démêleur 109, afin de permettre également la distribution de bottes rondes ou rectangulaires.

Le distributeur centrifuge 102 comporte un carter 106, avec un panneau 108 présentant un orifice d'entrée 107 par lequel le produit peut parvenir à une turbine de distribution 110 montée tournante dans ce carter. Conformément au principe classique de distribution centrifuge, la turbine de distribution 110 est équipée de pales 112 servant à entraîner le produit arrivant dans le carter 106, lequel produit sort finalement par une goulotte 123, qui peut être articulée sur ledit carter.

On va maintenant s'attacher à décrire de façon détaillée la structure du distributeur centrifuge de l'engin de distribution précité, en se référant aux figures 2 à 4.

Conformément à un aspect essentiel de l'invention, la turbine de distribution 110 comporte un plateau tournant 111 sur lequel sont montées des pales 112.1 et 112.2, avec un agencement tel que le bord frontal 121 des pales le plus éloigné du plateau 111 est à une distance prédéterminée D du panneau 108 présentant l'orifice d'entrée 107, de façon à définir une chambre amont 120 dans laquelle pénètre le produit avant d'être soumis à l'action de ces pales.

En l'espèce, le carter 106 comporte, en plus du panneau 108 présentant l'orifice d'entrée 107, un autre panneau 113 définissant un espace intérieur dans lequel la turbine 110 est montée pour tourner autour d'un axe X par son moyeu 114, grâce à des moyens motorisés d'entraînement associés 118 qu'il est inutile de décrire ici. La chambre amont 120 ainsi délimitée intérieurement par le panneau 108 et le bord frontal des pales 112.1 et 112.2 de la turbine 110, permet un décompactage du produit pénétrant dans le carter 106 de la turbine de distribution, et une meilleure diffusion de ce produit dans ledit carter.

En l'espèce, le caisson 101 est équipé d'un cylindre démêleur 109, et, ainsi que cela est mieux visible sur la figure 3, il est possible de faire en sorte que des dents 125 passent dans la chambre amont 120 lors de la rotation du cylindre 109 (schématisé par la flèche 201). On obtient ainsi un démêlage favorisé du produit dans la chambre amont 120, ce qui permet de diminuer notablement la puissance de motorisation nécessaire.

La distance prédéterminée D sera en général choisie en fonction du type de produit concerné. La distance prédéterminée D sera cependant choisie au moins égale à 0,4 H où H est la hauteur axiale des pales 112.1 et 112.2, en particulier choisie entre O,4 H et O,9 H.

Il devient dès lors possible d'utiliser un orifice d'entrée de section importante, et en particulier de forme générale rectangulaire, sans risque de rencontrer un bourrage du fait du pincement du produit au niveau des bords de l'orifice d'entrée, comme cela était le cas pour les engins connus. De plus, le flux d'air généré dans la chambre amont 120 crée un effet favorable pour l'homogénéisation du produit pénétrant dans ladite chambre.

Chacune des pales 112.1 et 112.2 est fixée, par exemple par boulonnage, sur le plateau tournant 111 de la turbine de distribution 110. Il est intéressant à ce titre de prévoir que l'une au moins des pales 112.1, 112.2 de la turbine de distribution 110 présente une direction longitudinale 150 qui est légèrement inclinée par rapport à la direction radiale associée 151, dans le sens du dégagement vers l'extérieur. Sur la figure 2, on distingue ainsi un angle a formé par les deux directions précitées 150 et 151 pour une pale 112.2, la direction 150 étant en arrière de la direction 151 en considérant le sens de rotation noté 200 de la turbine de distribution 110. A titre indicatif, on pourra utiliser un angle compris entre 5 et 1O°.

Par ailleurs, il est intéressant que la turbine de distribution 110 comporte au moins une pale qui est prolongée au moins radialement vers l'intérieur, de façon à brasser la zone immédiatement adjacente à l'axe 114 de cette turbine. En l'espèce, la turbine de distribution 110 comporte deux pales 112.1 qui sont prolongées radialement vers l'intérieur, ces deux pales étant symétriques l'une de l'autre par rapport à l'axe 114 de ladite turbine et étant ici également fixées au plateau du moyen 114.1, les autres pales 112.2 étant plus courtes, c'est-à-dire s'étendant en-deçà de ce plateau de moyeu 114.1. De telles pales prolongées permettent d'éviter toute accumulation de produit au voisinage de l'axe de la turbine, c'est-à-dire dans une zone dans laquelle l'action centrifuge est faible.

On vient de voir que l'agencement des pales de la turbine de distribution est particulier, mais la section de ces pales peut être également organisée selon un profil particulier, profil qui est mieux visible sur la coupe de la figure 4.

La pale 112.1 concernée comporte en effet une portion de base 117, qui est fixée par une aile 115 au plateau 111, ici au moyen de boulons 116 et cette portion de base 117 est ici légèrement inclinée vers le plateau 111, pour former un angle b aigu du côté correspondant au sens de rotation 200 de la turbine. A titre indicatif, on pourra choisir un angle b voisin de 5°. Une telle inclinaison de la portion de base 117 permet de mieux ramener le produit vers le plateau de la turbine. En outre, la portion de base 117 présente supérieurement un pli 122, de façon à définir un rebord 119 légèrement incliné par rapport à ladite portion de base, du côté correspondant au sens de rotation 200 de la turbine de distribution 110. A titre indicatif, l'angle c ainsi formé par ce rebord incliné 119 pourra être de l'ordre de 45°. Un tel rebord replié permet d'éviter un stationnement prolongé du produit dans la chambre amont de décompactage. Les dimensions relatives de la portion de base et du rebord incliné des pales seront choisies en fonction du type de produit concerné : on pourra par exemple adopter un pliage des pales sensiblement aux trois quarts de la longueur en partant du pliage définissant l'aile de fixation de cette pale. Le profil particulier précité pourra naturellement concerner également les pales prolongées 112.2, pour avoir une action efficace de la turbine de distribution.

L'invention n'est pas limitée au mode de réalisation qui vient d'être décrit, mais englobe au contraire toute variante reprenant, avec des moyens équivalents, les caractéristiques essentielles énoncées plus haut.

En particulier, l'invention pourra également s'appliquer à des engins de distribution équipés de moyens de recyclage (distributeur-mélangeur) et/ou équipés d'une porte arrière articulée sur un bras s'étendant au-dessus du caisson (désileuse).

## Revendications

1. Engin de distribution comportant un caisson, un carter sur un côté du caisson comprenant un orifice d'entrée au niveau d'un panneau et un orifice périphérique de sortie, une turbine de distribution équipée de pales sensiblement radiales et montée tournante dans ce carter, et des moyens pour entraîner le produit contenu dans le caisson vers la turbine, la turbine de distribution (110) comportant un plateau tournant (111) sur lequel sont montées les pales (112.1, 112.2), avec un agencement tel que le bord frontal (121) des pales le plus éloigné du plateau (111) est à une distance prédéterminée (D) du panneau (108) présentant l'orifice d'entrée (107), caractérisé en ce que ladite distance prédéterminée est au moins égale à 0,4 H, où H est la hauteur axiale des pales (112.1, 112.2), de façon à définir une chambre amont (120) dans laquelle pénètre le produit avant d'être soumis à l'action desdites pales.

2. Engin de distribution selon la revendication 1, dont le caisson est équipé de moyens de déchiquetage adjacents au panneau présentant l'orifice d'entrée, caractérisé en ce que les moyens de déchiquetage comportant un cylindre démêleur (109), dont des dents (125) passent dans la chambre amont (120) lors de la rotation dudit cylindre.

3. Engin de distribution selon la revendication 1 ou la revendication 2, caractérisé en ce que la distance prédéterminée (D) est voisine de 0,9 H.

4. Engin de distribution selon l'une des revendications 1 à 3, caractérisé en ce que l'une au moins des pales (112.1, 112.2) de la turbine de distribution (110) comporte une portion de base (117) qui est fixée au plateau (111) en étant légèrement inclinée vers ledit plateau, pour former un angle (b) aigu du côté correspondant au sens de rotation de ladite turbine.

5. Engin de distribution selon l'une des revendications 1 à 4, caractérisé en ce que l'une au moins des pales (112.1, 112.2) de la turbine de distribution (110) comporte une portion de base (117) qui est fixée au plateau (111), et qui présente un rebord (119) légèrement incliné par rapport à ladite portion de base, du côté correspondant au sens de rotation de ladite turbine.

6. Engin de distribution selon l'une des revendications 1 à 5, caractérisé en ce que l'une au moins des pales (112.1, 112.2) de la turbine de distribution (110) présente une direction longitudinale (150) qui est légèrement inclinée par rapport à la direction radiale associée (151), dans le sens du dégagement vers l'extérieur.

7. Engin de distribution selon l'une des revendications 1 à 6, caractérisé en ce que la turbine de distribution (110) comporte au moins une pale (112.1) qui est prolongée radialement vers l'intérieur, de façon à brasser la zone immédiatement adjacente à l'axe (114) de ladite turbine.

8. Engin de distribution selon la revendication 7, caractérisé en ce que la turbine de distribution (110) comporte deux pales (112.1) prolongées radialement vers l'intérieur, ces deux pales étant symétriques l'une de l'autre par rapport à l'axe (114) de ladite turbine.

## Claims

1. A distribution apparatus comprising a bin, a casing on a side of the bin comprising an intake orifice at the level of a panel and a peripheral outlet orifice, a distribution turbine provided with substantially radial blades and mounted rotatably in said casing, and means for entraining the product contained in the bin towards the turbine, the distribution turbine (110) comprising a rotary plate (111) on which are mounted the blades (112.1, 112.2), in an arrangement such that the front edge (121) of the blades which is most remote from the plate (111) is at a predetermined distance (D) from the panel (108) having the intake orifice (107), characterised in that said predetermined distance is at least equal to 0.4 H wherein H is the axial height of the blades (112.1, 112.2) in such a way as to define an upstream chamber (120) into which the product passes before being subjected to the action of said blades.

2. A distribution apparatus according to claim 1 wherein the bin is provided with chopping means adjacent to the panel having the intake orifice, characterised in that the chopping means comprise an unravelling cylinder (109) whose teeth (125) pass into the upstream chamber (120) when said cylinder rotates.

3. A distribution apparatus according to claim 1 or claim 2 characterised in that the predetermined distance (D) is close to 0.9 H.

4. A distribution apparatus according to one of claims 1 to 3 characterised in that one at least of the blades (112.1, 112.2) of the distribution turbine (110) comprises a base portion (117) which is fixed to the plate (111) while being slightly inclined towards said plate to form an acute angle (b) on the side corresponding to the direction of rotation of said turbine.

5. A distribution apparatus according to one of claims 1 to 4 characterised in that one at least of the blades (112.1, 112.2) of the distribution turbine (110) comprises a base portion (117) which is fixed to the plate (111) and which has an edge part (119) that is slightly inclined with respect to said base portion on the side corresponding to the direction of rotation of said turbine.

6. A distribution apparatus according to one of claims 1 to 5 characterised in that one at least of the blades (112.1, 112.2) of the distribution turbine (110) is in a longitudinal direction (150) which is slightly inclined with respect to the associated radial direction (151) in the direction of divergence towards the exterior.

7. A distribution apparatus according to one of claims 1 to 6 characterised in that the distribution turbine (110) comprises at least one blade (112.1) which is prolonged radially towards the interior in such a way as to work the zone immediately adjacent to the axis (114) of the turbine.

8. A distribution apparatus according to claim 7 characterised in that the distribution turbine (110) comprises two blades (112.1) which are prolonged radially towards the interior, said two blades being symmetrical relative to each other with respect to the axis (114) of said turbine.

## Patentansprüche

1. Streumaschine, umfassend einen Kasten, ein auf einer Seite des Kastens angeordnetes Gehäuse mit einer Einlaßöffnung in Höhe einer Wand und mit einer umfangsseitigen Auslaßöffnung, eine Streuturbine, die mit im wesentlichen radialen, in dem Gehäuse drehbar gelagerten Schaufeln versehen ist, und Mittel zum Vortrieb des in dem Kasten enthaltenen Gutes in Richtung auf die Turbine, wobei die Streuturbine (110) eine Drehscheibe (111) hat, an der die Schaufeln (112.1, 112.2) montiert sind, deren Anordnung so getroffen ist, daß die von der Drehscheibe (111) am weitesten entfernte Vorderkante (121) der Schaufeln zu der die Einlaßöffnung (107) aufweisenden Wand (108) einen vorgegebenen Abstand (D) hat, dadurch **gekennzeichnet**, daß der vorgegebene Abstand wenigstens gleich 0,4 H ist, wobei H die axiale Höhe der Schaufeln (112.1, 112.2) ist, so daß eine stromaufwärtige Kammer (120) definiert wird, durch die das Gut hindurchdringt, bevor es der Wirkung der Schaufeln ausgesetzt wird.

2. Streumaschine nach Anspruch 1, deren Gehäuse mit Zerkleinerungsmitteln versehen ist, die der die Einlaßöffnung aufweisenden Wand benachbart sind, dadurch **gekennzeichnet**, daß die Zerkleinerungsmittel einen Aufbrechzylinder (109) umfassen, dessen Zähne (125) während der Drehung des Zylinders in die stromaufwärtige Kammer (120) treten.

3. Streumaschine nach Anspruch 1 oder 2, dadurch **gekennzeichnet**, daß der vorgegebene Abstand (D) etwa 0,9 H beträgt.

4. Streumaschine nach einem der Ansprüche 1 bis 3, dadurch **gekennzeichnet**, daß zumindest eine der Schaufeln (112.1, 112.2) der Streuturbine (110) einen Basisbereich (117) hat, der mit geringer Neigung zur Drehscheibe (111) an dieser befestigt ist, um auf der der Drehrichtung der Turbine entsprechenden Seite einen spitzen Winkel (b) zu bilden.

5. Streumaschine nach einem der Ansprüche 1 bis 4, dadurch **gekennzeichnet**, daß zumindest eine der Schaufeln (112.1, 112.2) der Streuturbine (110) einen Basisbereich (117) hat, der an der Scheibe (111) befestigt ist und einen Rand (119) besitzt, der auf der der Drehrichtung der Turbine entsprechenden Seite relativ zu dem Basisbereich leicht geneigt ist.

6. Streumaschine nach einem der Ansprüche 1 bis 5, dadurch **gekennzeichnet**, daß zumindest eine der Schaufeln (112.1, 112.2) der Streuturbine (110) in Austrittsrichtung mit ihrer Längsrichtung (150) eine geringe Neigung relativ zur zugeordneten radialen Richtung (151) aufweist.

7. Streumaschine nach einem der Ansprüche 1 bis 6, dadurch **gekennzeichnet**, daß die Streuturbine (110) zumindest eine Schaufel (112.1) hat, die radial nach innen verlängert ist, so daß die der Turbinenachse (114) unmittelbar benachbarte Zone durchrührt wird.

8. Streumaschine nach Anspruch 7, dadurch **gekennzeichnet**, daß die Streuturbine (110) zwei in radialer Richtung nach innen verlängerte Schaufeln (112.1) hat, die in bezug auf die Turbinenachse (114) symmetrisch zueinander angeordnet sind.
